# EUROPÄISCHE PATENTANMELDUNG

(11) **EP 4 711 487 A1**
(43) Veröffentlichungstag der Anmeldung: **18.03.2026**
(21) Anmeldenummer: 25220065.4
(22) Anmeldetag: 29.04.2024
(51) Int. Cl.: C23C 2/00, C23C 2/02, C23C 2/06, C23C 2/26, F27D 11/02, F27D 19/00, F27D 21/00, H02J 15/00

(54) **VERFAHREN ZUR NUTZUNG VON IN EINEM STROMNETZ ANFALLENDEN ÜBERSCHUSSSTROM UND ANLAGE ZUM BETREIBEN EINES VORZUGSWEISE INDUSTRIELLEN PROZESSES**

(30) Priorität: 25.07.2023 DE 102023119611
(62) Teilanmeldung aus: 24723079.0
(71) Anmelder: Fontaine Holdings NV, 3530 Houthalen (BE)
(72) Erfinder: PINGER, Thomas, 3530 Houthalen (BE); BAUMGÜRTEL, Lars, 3530 Houthalen (BE); BENDIEK, Birgitt, 3530 Houthalen (BE)
(74) Vertreter: Von Rohr Patentanwälte Partnerschaft mbB

(57) **Zusammenfassung**

Die vorliegende Erfindung betrifft eine Anlage zum Betreiben eines industriellen Prozesses unter Nutzung einer Schmelze, vorzugsweise in einer Feuerverzinkung von Eisen- oder Stahlbauteilen, sowie deren Verwendung.

## Beschreibung

Die Erfindung bezieht sich auf ein Verfahren zur Nutzung von in einem Stromnetz anfallenden Überschussstrom. Darüber hinaus betrifft die vorliegende Erfindung auch eine Anlage zum Betreiben eines vorzugsweise industriellen Prozesses bzw. Produktionsprozesses unter Nutzung einer Schmelze und, vorzugsweise, eines der Schmelze vor- oder nachgelagerten Behandlungsbades, vorzugsweise in einer Feuerverzinkung von Eisen- oder Stahlbauteilen mit vorgelagerter Flussmittelbehandlung. Schließlich betrifft die vorliegende Erfindung auch die Verwendung einer vorzugsweise metallischen Schmelze und/oder eines Behandlungsbades, vorzugsweise eines Flussmittelbades, als Wärme- und/oder Pufferspeicher.

Die vorliegende Erfindung betrifft das Betreiben industrieller Prozesse, in deren Rahmen die Fertigung bzw. die Be- und/oder Verarbeitung von Realgütern bzw. Produkten in gewerblichem Maßstab erfolgt. Unter einem "industriellen Prozess" ist im Sinne der vorliegenden Erfindung somit die Massenproduktion und/oder Massenfertigung bzw. die gewerbsmäßige Verarbeitung von Realgütern bzw. Bauteilen, insbesondere zur Beschichtung von Werkstücken, zu verstehen.

Bei industriellen Produktionsprozessen fällt zwangsläufig ein hoher Prozesswärmebedarf an, gerade bei Wärmebehandlungs- bzw. Verfahrensschritten, durch welche die Werkstoffeigenschaften und/oder Beschaffenheit geändert werden sollen. Aufgrund des gewerblichen Maßstabs der in Rede stehenden Produktionsprozesse liegt es dabei in der Natur der Sache, dass die hierzu erforderliche Wärme- bzw. Energieversorgung kontinuierlich und/oder über den gesamten Produktionsprozess, und somit dauerhaft, sichergestellt sein muss.

In diesem Zusammenhang zielt die vorliegende Erfindung gezielt auf wärmeverbrauchende industrielle Produktions- bzw. Verarbeitungsprozesse ab, die unter Vorhaltung und/oder Verwendung einer beheizten Schmelze erfolgen bzw. in welchem eine beheizte Schmelze bereitgestellt und/oder vorgehalten wird. Unter beheizten Schmelzen ist vorzugsweise flüssiges Metall jeglicher Art und bedarfsweise jeglicher Legierung zu verstehen, welches in industriellen Produktionsprozessen in vielfältiger Weise eingesetzt wird, beispielsweise beim Gießen oder Beschichten von Werkstücken.

Den primären Ausgangspunkt der Erfindung bilden jedoch industrielle Beschichtungsprozesse, in denen eine festhaftende Schicht aus formlosem Werkstoff auf die Oberfläche eines Werkstückes aufgebracht wird. Zu diesem Zweck wird dann eine als Beschichtungsmasse fungierende beheizte Schmelze dementsprechend vorgehalten bzw. bereitgestellt.

Ein in der Industrie besonders häufig eingesetztes Beschichtungsverfahren ist das Verzinken, insbesondere Feuerverzinken, wobei ein metallischer, schmelzförmiger Zinküberzug zum Schutz vor Rost oder Korrosion durch Eintauchen der zu beschichtenden Werkstücke in die zinkhaltige Beschichtungsmasse aufgebracht wird.

Der hohe Energiebedarf gerade beim Feuerverzinken ist insbesondere darauf zurückzuführen, dass die für die Beschichtung vorgehaltene bzw. bereitgestellte Zinkschmelze dauerhaft bzw. unter konstanter Wärmezufuhr auf einer definierten Prozesstemperatur gehalten werden muss. Nur so lässt sich aufgrund der Abhängigkeit zwischen der zu erreichenden Beschichtungsqualität einerseits und der Temperatur der Schmelze bzw. Beschichtungsmasse andererseits eine zielgerichtete Prozessführung gewährleisten.

Unter dem Gesichtspunkt der Transformation zu einer klimaneutralen Industrie ist dies zwangsläufig mit entsprechenden Herausforderungen verbunden, zumal der Prozesswärmebedarf in Produktionsprozessen der eingangs genannten Art, insbesondere in der Verzinkung, in der Praxis durch die Verbrennung fossiler Brennstoffe, zumeist von Gas, wie Erdgas, erfolgt.

Diese Herausforderungen fallen bei industriellen Produktionsprozessen unter Nutzung von Schmelzen besonders stark ins Gewicht, da die damit einhergehende, vergleichsweise komplexe Prozessführung sowie das Erfordernis der dauerhaften und definierten Beheizung der Schmelze nach gängiger Meinung die Verbrennung fossiler Energieträger, wie Erdgas, erfordert, um eine ausreichende Wärmeeinkopplung und somit eine zuverlässige Beheizung der Schmelze sicherzustellen. Insofern und auch im Hinblick auf hohe Kosten durch etwaige Umbauten der Anlagentechnik wurde in der Praxis bisher davon Abstand genommen, den Erdgasbrennstoff als Energieträger in Beschichtungsverfahren, insbesondere in Verzinkungen, zu ersetzen.

Aufgabe der vorliegenden Erfindung ist es nun, die vorgenannten Nachteile des Standes der Technik zu vermeiden oder aber zumindest im Wesentlichen zu reduzieren.

Erfindungsgemäß wird zur Lösung der vorgenannten Aufgabe ein Verfahren zur Nutzung von in einem Stromnetz anfallenden Überschussstrom vorgeschlagen, wobei der Überschussstrom dem Stromnetz zumindest teilweise entnommen und zumindest eine Schmelze, insbesondere eine Metallschmelze, durch den entnommenen Überschussstrom thermisch aufgeladen und/oder erhitzt wird, und wobei die erhitzte Schmelze sowohl als elektrischer Wärmespeicher als auch zur Verarbeitung in einem industriellen Produktionsprozess, vorzugsweise einem Beschichtungsprozess, wie einer Verzinkung, insbesondere Feuerverzinkung, vorgehalten und/oder bereitgestellt wird bzw. werden.

Der Überlaststrom wird vorzugsweise während der Zeitdauer seines Auftretens zur Erhitzung der Schmelze und/oder der thermischen Aufladung der Schmelze dem Stromnetz entnommen. Bedarfsweise wird der Überlaststrom insbesondere nach der Erhitzung und/oder der thermischen Aufladung der Schmelze zur Wärmehaltung und/oder Warmhaltung, insbesondere zur Temperaturhaltung, der Schmelze ebenfalls genutzt, insbesondere wodurch sich das Zeitintervall zur Nutzung des Überlaststroms erhöht.

Bei dem Zustandekommen der vorliegenden Erfindung ist erkannt worden, dass es eine zweckmäßige Maßnahme darstellt, einen in einem Stromnetz anfallenden Überschussstrom in eine Schmelze einzuleiten und zur zumindest teilweisen Abdeckung des Prozesswärmebedarfs in einem industriellen Produktionsprozess zu nutzen, in welchem die erhitzte Schmelze verarbeitet wird. Besonders bevorzugt wird der Prozesswärmebedarf und/oder die Aufladung der Schmelze als thermischer Wärmespeicher vollständig durch den aus dem Stromnetz entnommenen Überschussstrom abgedeckt. Es ist jedoch auch möglich, dass der Überschussstrom zur teilweisen Abdeckung des Wärmebedarfs genutzt wird, und der weitere Wärmebedarf durch andere Energieträger, beispielsweise durch aus dem Prozess selbst stammende Prozesswärme oder sonstigen Energieträgern abgedeckt wird.

Unter "Überschussstrom" ist im Sinne der vorliegenden Erfindung überschüssige bzw. nicht verbrauchte elektrische Energie zu verstehen. Überschussstrom liegt insbesondere infolge der Einspeisung aus erneuerbaren Energien vor, die nur mit zeitlich schwankender Leistung zur Verfügung stehen und deshalb zu einem Überangebot an Strom bzw. zu einer Überkapazität im Stromnetz führen können. Insofern treten vermehrt Situationen auf, in denen elektrische Energie bzw. Strom aufgrund des im Stromnetz vorliegenden Überangebots bzw. Überschussstroms nicht vollständig verbraucht werden kann. Vorzugsweise wird seitens des Netzbetreibers vorgegeben bzw. angezeigt, wenn Überschussstrom im Stromnetz vorliegt.

In der Praxis wurde bisher versucht, Überschussstrom bzw. Stromspitzen in Speichersystemen wie Batterien und Pump-Speicher-Kraftwerken zu speichern und später wieder in das Stromnetz einzuspeisen. Der Einsatz von traditionellen Batteriesystemen ist jedoch im Hinblick auf Kosten bzw. den damit verbundenen Ressourcenbedarf problematisch. Auch unter ökologischen Gesichtspunkten ist der Einsatz von Batterien, die eine begrenzte Lebensdauer mit perspektivisch bzw. zunehmendem Einsatz abnehmender Leistungsfähigkeit aufweisen, kontraproduktiv und somit gerade aus Nachhaltigkeitsgesichtspunkten nicht zielführend. Auch das Recycling bzw. die Entsorgung von Batterien in der erforderlichen Größenordnung gestaltet sich bekanntermaßen als problematisch. Es ist jedoch erfindungsgemäß nicht ausgeschlossen, dass in Ergänzung zur Erhitzung der Schmelze durch den Überschussstrom auch Batteriesysteme oder sonstige Systeme zur Speicherung von Überschussstrom eingesetzt werden können. Sofern kein Überschussstrom vorliegt, kann dann mit Hilfe der aufgeladenen Batteriesysteme eine Erhitzung bzw. eine thermische Aufladung der Schmelze erfolgen. Auch eine kombinierte Aufladung der Schmelze durch Überschussstrom einerseits und Entladung von Batteriesystemen andererseits ist erfindungsgemäß möglich.

Diese Problematik aufgreifend wird der in einem Stromnetz anfallende Überschussstrom aufgrund des erfindungsgemäßen Konzepts nunmehr einer zielführenden bzw. speziellen industriellen Nutzung zugeführt, wobei eine Schmelze unter Nutzung des Überschussstroms erhitzt und als elektrischer Wärmespeicher zur, vorzugsweise anschließenden, Verarbeitung in einem industriellen Produktionsprozess vorgehalten wird.

Als "elektrischer Wärmespeicher" bzw. "Wärmebatterie" bzw. als elektrisch betriebene Heizung nimmt die Schmelze, insbesondere die Metallschmelze, elektrische Energie in Form des Überschussstroms auf und speichert diese in Form von thermischer Energie bzw. Wärme.

Überschussstrom, d.h. elektrische Energie mit zeitlich schwankender Leistung, ist insbesondere auf den Anteil erneuerbarer Energien zurückzuführen, deren Stromanteil vermehrt und priorisiert in das Stromnetz eingespeist wird. Da die zugrundeliegenden Energiequellen, nämlich Sonne, Wind und Wasser, zeitlich nicht konstant verfügbar sind und ihre Verfügbarkeit darüber hinaus nur schlecht vorhersagbar ist, sind schwankende Leistungen und Überkapazitäten bzw. Zeiten von Überschussstrom letztlich nicht vermeidbar. So kann zum Beispiel ein kurzzeitig hohes Windaufkommen zu einem Überangebot an Strom bzw. zu Stromspitzen im Stromnetz führen, einhergehend mit der Problematik, dass der dadurch bedingte Überschussstrom abgeleitet bzw. verbraucht werden muss, um eine Überlastung des Stromnetzes bzw. damit einhergehender Schäden zu vermeiden, wobei auch eine Abweichung der notwendigen Netzfrequenz, beispielsweise von 50 Hz, bereits zu einer Überlastung bzw. einem Ausfall und/oder einer Beeinträchtigung des Stromnetzes führen kann. Zur Vermeidung von Überschussstrom und einer Gefährdung der Stromnetzstabilität kann es deshalb zur zeitweisen Drosselung oder gar Abschaltung von Erneuerbaren-Energie (EE)-Anlagen kommen. Dies führt zu einer technisch und betriebswirtschaftlich ineffizienten Nutzung dieser Anlagen. Ebenso werden hierdurch die Ziele zur Erhöhung des EE-Anteils am Strommix eingebremst.

Mit dem erfindungsgemäßen Konzept wird nun die Möglichkeit geschaffen, auch zeitlich stark schwankenden Überschussstrom einer prozesstechnischen Nutzung durch Erhitzung der Schmelze zuzuführen, da Schmelzen der in Rede stehenden Art eine vergleichsweise hohe Wärmeträgheit aufweisen bzw. ihre Temperatur bei Wärmezufuhr und/oder Wärmeabnahme durch eine relativ hohe Massen- bzw. Wärmekapazität nur verhältnismäßig langsam ändern. Dementsprechend kann eine hohe Aufnahme des Überschussstroms erfolgen, zumal der im vorzugsweise nachgelagerten industriellen Prozess anfallende Prozesswärmebedarf entsprechend hoch ist und entsprechend viel Überschussstrom zur anschließenden Nutzung der Schmelze zugeführt werden kann. Entsprechend können EE-Anlagen effizienter genutzt werden und derart der EE-Anteil im Strommix erhöht werden. Die Nutzung des Überschussstroms im eingangs genannten Sinne basiert dabei auf der grundlegenden Erkenntnis, dass die Beheizung der Schmelze auch elektrisch basiert bzw. auf Basis einer elektrischen Beheizung im industriellen Maßstab überhaupt möglich ist.

So erfolgt in industriellen Prozessen unter Einsatz einer Schmelze, gerade in der Verzinkung, die Abdeckung des diesbezüglichen Wärmebedarfs bisher und ausschließlich durch fossile Energieträger, wie Erdgas oder sonstigen fossilen gasförmigen Energieträgern. Insofern stellt der Einsatz einer elektrisch erhitzen Schmelze zur Verarbeitung in einem industriellen Produktionsprozess, insbesondere in einem Beschichtungsprozess, wie einer Verzinkung, eine Abkehr zu der vorherrschenden Meinung dar. Insbesondere ist es gerade im Zusammenhang mit Verzinkungsanlagen als unverhältnismäßig erachtet worden, einen anderen Energieträger als die fossile Lösung in Betracht zu ziehen, da dies mit umständlichen Umbau- und Umschaltmaßnahmen der in Rede stehenden Anlagen verbunden wäre, zumal die in Rede stehenden wärmeverbrauchenden industriellen Prozesse, insbesondere die Verzinkung, durch eine vergleichsweise komplexe Verfahrensführung gekennzeichnet sind.

Im Sinne der erfindungsgemäßen Lösung wird die in Rede stehende Problematik zunächst dadurch umgangen, dass eine thermische Aufladung der Schmelze unter Nutzung von Überschussstrom letztlich entkoppelt vom industriellen Prozess selbst erfolgen kann. Im Rahmen dieser Aufladung bzw. des Aufladungszeitraums kann eine gegenüber dem Verarbeitungsprozess bzw. dem industriellen Prozess vereinfachte Prozessführung umgesetzt werden, so dass eine einfache konstruktive Umsetzung zur Einkopplung des Überschussstroms in die Schmelze umgesetzt werden kann, beispielsweise durch eine elektrische Beheizungseinrichtung. Dadurch wird die hohe Eignung der Schmelze im Hinblick auf eine elektrische Wärmespeicherung genutzt. Es ist jedoch anzumerken, dass auch während des Produktionsprozesses eine thermische Aufladung der Schmelze unter Nutzung von Überschussstrom umgesetzt werden kann, beispielsweise durch eine entsprechende elektrische Beheizungseinrichtung.

Im Ergebnis wird im Rahmen der vorliegenden Erfindung somit erstmalig und in Form eines in sich geschlossenen Konzepts vorgeschlagen, Überschussstrom gezielt zur Erhitzung einer Schmelze zu nutzen, so dass die erhitzte Schmelze als elektrischer Wärmespeicher fungiert und zur insbesondere anschließenden Verarbeitung in einem industriellen Produktionsprozess bereitgestellt werden kann. Durch die Erfindung wird damit die Möglichkeit geschaffen, die aus Überschussstrom stammende elektrische Energie zur gezielten Nutzung in einer industriellen Prozessumgebung, nämlich zum Beheizen einer Schmelze, einzusetzen. Gleichzeitig ermöglicht die Erfindung aber auch einen Beitrag zur Gewährleistung eines stabilen Stromnetzes mit bevorzugt konstanter Netzfrequenz.

Vor diesem Hintergrund leistet die erfindungsgemäße Lösung somit einen Beitrag im Hinblick auf die Vermeidung einer Überlastung des Stromnetzes sowie eine effiziente und zweckgerichteten industrielle Nutzung von Überschussstrom, der insbesondere vornehmlich aus regenerativen Energieträgern bzw. Sonne-, Wind-und Wasserkraft stammt.

Überdies leistet die erfindungsgemäße Lösung auch einen Beitrag im Hinblick auf eine Dekarbonisierung industrieller Produktionsprozesse, insbesondere Verzinkungsprozesse, da die aus der Praxis vorgesehene Erhitzung durch fossile Energieträger zumindest anteilig durch elektrische Energie bzw. durch den Überschussstrom ersetzt wird, einhergehend mit einer Reduzierung, insbesondere Vermeidung, von klimaschädlichen Emissionen, wie Kohlenstoffdioxiden.

Insofern wird durch die erfindungsgemäße Lösung in mehrfacher Hinsicht eine verbesserte Nachhaltigkeit industrieller Prozesse ermöglicht, wodurch letztlich ein Beitrag zur Transformation zu einer klimaneutralen Industrie geleistet wird.

Die obigen, grundsätzlichen Erwägungen der erfindungsgemäßen Lösung vorausgeschickt, werden nachfolgend vorteilhafte verfahrensgemäße Aspekte der vorliegenden Erfindung erörtert.

Gemäß einer bevorzugten Verfahrensführung erstreckt sich die Nutzung des Überschussstroms über die Erhitzung der Schmelze hinaus auch auf wenigstens ein der Schmelze vor- oder nachgelagertes Behandlungsbad, insbesondere ein der Schmelze vorgelagertes Flussmittelbad.

Insofern kann, zusätzlich zur erhitzten Schmelze, auch das erhitzte Behandlungsbad sowohl als elektrischer Wärmespeicher als auch zur Verarbeitung im industriellen Produktionsprozess vorgehalten und/oder bereitgestellt werden.

Auch das erhitzte Behandlungsbad kann bevorzugt nach erfolgter Erhitzung durch die zumindest teilweise Verwendung von Überlaststrom thermisch warmgehalten bzw. auf zumindest im Wesentlichen konstanter Temperatur gehalten werden.

Die Flussmittelbehandlung unter Verwendung eines Flussmittelbades, auch Fluxen genannt, wird insbesondere in Beschichtungsprozessen, wie der Verzinkung, insbesondere Feuerverzinkung, verwendet, um vor der Reaktion der Bauteil- bzw. Stahloberfläche mit der schmelzflüssigen Beschichtung, insbesondere Zink, eine letzte intensive Feinstreinigung der Bauteiloberfläche vorzunehmen und/oder die Oxidhaut der Zinkoberfläche aufzulösen sowie eine erneute Oxidation der Bauteiloberfläche, insbesondere Stahloberfläche, bis zum Beschichtungs- bzw. Verzinkungsvorgang zu verhindern. Darüber hinaus erhöht das Flussmittelbad die Benetzungsfähigkeit zwischen der Bauteiloberfläche und dem Beschichtungsbad bzw. dem schmelzflüssigen Zink.

Insofern stellt das Behandlungsbad einen weiteren wärmeverbrauchenden Verfahrensschritt im Sinne des in Rede stehenden industriellen Produktionsprozesses dar. Dabei ist es besonders zweckmäßig, zur Abdeckung auch der diesbezüglich benötigten Wärmeenergie auf den in Rede stehenden Überschussstrom zurückzugreifen, so dass auch das erhitzte Behandlungsbad als elektrischer Wärmespeicher zur Verarbeitung in dem industriellen Produktionsprozess vorgehalten und/oder bereitgestellt wird.

Gemäß einer besonders bevorzugten Verfahrensführung ist vorgesehen, dass Wärmeenergie der erhitzten Schmelze und/oder des erhitzten Behandlungsbades zumindest teilweise wieder entnommen und mittels wenigstens einer Umwandlungseinrichtung in elektrischen Strom umgewandelt wird, vorzugsweise wobei der umgewandelte elektrische Strom dem Stromnetz wieder zugeführt wird.

Demgemäß ist eine sogenannte "bi-direktionale" bzw. eine in entgegengesetzter Richtung wirkende Energieumwandlung vorgesehen, wonach neben der Entnahme des Überschussstroms zum Erhitzen der metallischen Schmelze bzw. des Behandlungsbades auch eine Rückspeisung überschüssiger Wärme der Schmelze bzw. des Behandlungsbades durch Umwandlung in elektrische Energie erfolgt.

Die Umwandlung der Wärmeenergie in elektrischen Strom kann in vielfältiger Weise erfolgen, beispielsweise nach dem Prinzip der "Thermo-Photovoltaik", wobei spezielle Thermo-Photovoltaik-Zellen als Absorber fungieren und mit Bandlücken im Infrarotbereich Wärmestrahlung in elektrische Leistung umwandeln können. Prinzipiell sind diesbezüglich jedoch vielfältige technische Umsetzungen möglich, um Wärmestrahlung bzw. Wärmeenergie in elektrische Energie umzuwandeln.

Durch die Rückspeisung bzw. Umwandlung von Wärmeenergie in elektrischen Strom wird eine weiterführende Effizienzsteigerung des erfindungsgemäßen Verfahrens umgesetzt, indem vermieden wird, dass überschüssige Wärmeenergie ungenutzt an die Umgebung abgegeben wird, sondern vergleichsweise verlustfrei wieder in elektrische Energie rückgewandelt und in das Stromnetz zur weiteren Verwendung wieder zurückgespeist wird.

Insbesondere ist erfindungsgemäß vorgesehen, dass die Beheizung der Schmelze und/oder des Behandlungsbades und/oder die Wärmeentnahme aus der Schmelze und/oder aus dem Behandlungsbad dem Produktionsprozess vor- oder nachgelagert und/oder von dem Produktionsprozess entkoppelt ist.

Die Entkopplung erfolgt zweckmäßigerweise dahingehend, dass ein insbesondere vorgelagerter thermischer "Aufladungszeitraum" vorgesehen ist, der entkoppelt vom "Produktionsprozess" ist, wobei im Aufladungszeitraum ein erhöhter Anteil an Überschussstrom im Stromnetz zu erwarten ist. Gerade bei auf Solarenergie zurückgehendem Überschussstrom kann es zweckmäßig sein, die Aufladung tagsüber bei entsprechend anfallender Überkapazität vorzunehmen, um die Schmelze und, vorzugsweise, das Behandlungsbad vorgelagert zur Produktion zunächst thermisch durch besonders stark auftretenden Überschussstrom aufzuladen. Sofern kein Überschussstrom im Stromnetz vorliegt, kann die Aufladung gestoppt bzw. ausgesetzt werden. Alternativ kann jedoch auch eine Entladung von etwaig vorgesehenen Batteriesystemen oder sonstigen Speichersystemen vorgesehen werden, um die Aufladung auch bei nicht vorliegendem Überschussstrom fortzusetzen.

Der industrielle Produktionsprozess unter Nutzung der aufgeladenen bzw. erhitzten Schmelze bzw. des aufgeladenen und/oder erhitzten Behandlungsbades kann dann erfolgen, wenn gegenüber dem Aufladungszeitraum ein verringerter Überschussstrom im Stromnetz vorliegt, beispielsweise im Hinblick auf durch Solarenergie begründeten Überschussstrom nachts bzw. bei verringerter Sonneneinstrahlung.

Insbesondere kann in diesem Zusammenhang vorgesehen sein, dass die Beheizung der Schmelze und/oder des Behandlungsbades zur Aufladung mit Überschussstrom zumindest zeitweise in einem Aufladungszeitraum zwischen 10.00 Uhr und 16.00 Uhr, vorzugsweise 9.00 Uhr bis 17.00 Uhr und insbesondere zwischen 6.00 Uhr bis 18.00 Uhr erfolgt und/oder dass der Produktionsprozess außerhalb des Aufladungszeitraums erfolgt.

Es versteht sich jedoch, dass auch eine Überschneidung des Aufladungszeitraums und des Produktionsprozesses erfolgen kann, wonach die Aufladung bzw. Erhitzung der Schmelze und/oder des Behandlungsbades unter Nutzung von Überschussstrom während des Betreibens des industriellen Produktionsprozesses bzw. des Beschichtungsprozesses, insbesondere der Verzinkung und/oder Feuerverzinkung, erfolgt. Bei dieser Konstellation erfolgt somit ein kombiniertes Verfahren zur Nutzung von in einem Stromnetz anfallenden Überschussstrom sowie zum Betreiben eines industriellen Prozesses unter Nutzung einer Schmelze, vorzugsweise in einem Verzinkungsprozess, wie einer Verzinkung, vorzugsweise Feuerverzinkung mit vorgelagerter Flussmittelbehandlung.

Um eine besonders effiziente Aufladung zu ermöglichen, ist vorzugsweise vorgesehen, dass die Beheizung der Schmelze bzw. des Behandlungsbades und/oder die Wärmeentnahme aus der Schmelze bzw. aus dem Behandlungsbad über einen Zeitraum von wenigstens 1 Stunde pro Tag, vorzugsweise 5 Stunden pro Tag, erfolgt. Prinzipiell ist jedoch der Zeitraum zur Aufladung bzw. Entladung der Schmelze und/oder des Behandlungsbades flexibel wählbar, da die Schmelze bzw. das Behandlungsbad langfristig als Pufferspeicher bzw. elektrischer Wärmespeicher verwendet werden kann bzw. können, insbesondere aufgrund der vergleichsweise geringen Wärmeträgheit der insbesondere metallischen Schmelze bzw. des Behandlungsbades.

Das Auftreten des Überschussstroms kann über eine Detektionseinrichtung detektiert und die Schmelze und/oder das Behandlungsbad vorzugsweise automatisch mittels wenigstens einer elektrischen Beheizungseinrichtung bzw. einer weiteren elektrischen Beheizungseinrichtung erhitzt werden, vorzugsweise derart, dass die beheizte Schmelze und/oder das beheizte Behandlungsbad unter Nutzung von Überschussstrom in einer Aufladungstemperatur bereitgestellt und/oder vorgehalten wird bzw. werden, besonders bevorzugt wobei die Beheizung der Schmelze und/oder des Behandlungsbades ausschließlich durch die elektrische Beheizungseinrichtung bzw. der weiteren elektrischen Beheizungseinrichtung unter Nutzung von Überschussstrom erfolgt. Dies ermöglicht eine einfache und effiziente Prozessführung, wobei sichergestellt ist, dass ein Auftreten von Überschussstrom zuverlässig detektiert bzw. erkannt wird und zur thermischen Aufladung der Schmelze und/oder des Behandlungsbades genutzt wird.

Die Detektionseinrichtung kann an einem örtlich entkoppelten Ort, beispielsweise einem Netzbetreiber zugeordnet, vorgesehen sein.

Die Aufladungstemperatur, bei der die Schmelze und/oder das Behandlungsbad im Rahmen des Aufladungszeitraums vorgehalten wird bzw. werden, übersteigt die im Produktionsprozess vorliegende Verarbeitungstemperatur bzw. Produktionstemperatur der Schmelze und/oder des Behandlungsbades, vorzugsweise um wenigstens 10 °C, vorzugsweise um wenigstens 20 °C, besonders bevorzugt um wenigstens 50 °C.

Während im Rahmen der Produktion bzw. beim Produktionsprozess zur Sicherstellung der Beschichtungsqualität bestimmte Prozesstemperaturbereiche eingehalten werden müssen, kann der insbesondere vom Produktionsprozess entkoppelte Aufladungszeitraum diesbezüglich flexibler gestaltet werden. Insbesondere ist eine Überhitzung der Schmelze und/oder des Behandlungsbades gegenüber der Verarbeitungstemperatur beim Produktionsprozess möglich, um stark ausgeprägten Überschussstrom bzw. hohe Stromspitzen zur thermischen Aufladung zu nutzen.

Es versteht sich jedoch, dass die Aufladungstemperatur an die Verarbeitungstemperatur der Schmelze bzw. des Behandlungsbades angepasst bzw. als technisch gleichbedeutend betrachtet werden kann, um auch bei laufendem Produktionsprozess eine Aufladung der Schmelze und/oder des Behandlungsbades sicherzustellen und keine Einbußen im Hinblick auf die Prozess- bzw. Beschichtungsqualität aufgrund Überhitzung der Schmelze bzw. des Behandlungsbades hinnehmen zu müssen. Bei dieser Konstellation verlaufen der Aufladungszeitraum und der Produktionsprozess zumindest abschnittsweise parallel zueinander bzw. seitlich überlappend.

Gemäß einer besonders bevorzugten Ausführungsform ist vorgesehen, dass die Aufladungstemperatur wenigstens 10 °C, vorzugsweise wenigstens 20 °C, besonders bevorzugt wenigstens 30 °C, ganz besonders bevorzugt wenigstens 50 °C unterhalb einer Siedetemperatur der Schmelze und/oder des Behandlungsbades liegt. Dadurch wird sichergestellt, dass im Rahmen der im Aufladungszeitraum vorzugsweise vorgesehenen Überhitzung keine Beeinträchtigungen im Hinblick auf die Qualität der Schmelze bzw. des Behandlungsbades in der nachfolgenden Prozessführung zu besorgen sind.

Konkret ist vorzugsweise vorgesehen, dass die Aufladungstemperatur der Schmelze im Bereich von 390 °C bis 900 °C, vorzugsweise im Bereich von 430 °C bis 880 °C, besonders bevorzugt im Bereich vom 500 °C bis 850 °C, liegt.

Besonders bevorzugt liegt die Aufladungstemperatur des Behandlungsbades im Bereich von 60 °C bis 200 °C, vorzugsweise im Bereich von 80 °C bis 180 °C, besonders bevorzugt im Bereich von 100 °C bis 150 °C.

Nachfolgend wird, gemäß einem weiteren Aspekt der vorliegenden Erfindung, die erfindungsgemäße Anlage zum Betreiben eines vorzugsweise industriellen Prozesses beschrieben.

Konkret weist die Anlage einen Kessel für die zu beheizende Schmelze und, vorzugsweise, einen der Schmelze vor- oder nachgelagerten weiteren Kessel für ein Behandlungsbad, insbesondere für ein der Schmelze vorgelagertes Flussmittelbad, auf. Überdies ist wenigstens eine Taucheinrichtung zum Ein- und/oder Austauchen wenigstens eines Bauteils in die Schmelze und/oder aus der Schmelze vorgesehen.

Insbesondere ist die Taucheinrichtung ergänzend auch zum Ein- und/oder Austauchen des Bauteils in das Behandlungsbad und/oder aus dem Behandlungsbad ausgebildet.

Erfindungsgemäß weist die Anlage wenigstens eine elektrische Beheizungseinrichtung zum thermischen Aufladen und/oder Beheizen der Schmelze und, vorzugsweise, wenigstens eine weitere elektrische Beheizungseinrichtung zum thermischen Aufladen und/oder Beheizen des Behandlungsbades auf, insbesondere wobei wenigstens eine Steuer- und/oder Regelungseinrichtung vorgesehen ist, die dazu ausgebildet ist, einen in einem Stromnetz anfallenden Überschussstrom zumindest teilweise zu entnehmen und die elektrische Beheizungseinrichtung und, vorzugsweise, die weitere elektrische Beheizungseinrichtung zu betreiben bzw. diese zu steuern und/oder zu regeln.

Dementsprechend ist die erfindungsgemäße Anlage insbesondere zur vorrichtungsgemäßen Umsetzung des zuvor erörterten Verfahrens ausgebildet bzw. konzeptioniert. Die zuvor beim Verfahren erwähnten Vorteile gelten in gleicher Weise auch für die Anlage.

Die erfindungsgemäße Anlage basiert vorzugsweise auf einer herkömmlichen bzw. aus der Praxis bekannten Beschichtungsanlage, insbesondere Verzinkungsanlage, wobei im Hinblick auf das erfindungsgemäße Verfahren wenigstens eine elektrische Beheizungseinrichtung für die Schmelze und, vorzugsweise, wenigstens eine weitere elektrische Beheizungseinrichtung für das Behandlungsbad vorgesehen ist bzw. sind.

Mit der ebenfalls erfindungsgemäß vorgesehenen Steuer- und/oder Regelungseinrichtung kann der im Stromnetz anfallende Überschussstrom entnommen und die elektrische Beheizungseinrichtung und, vorzugsweise, die weitere elektrische Beheizungseinrichtung, betrieben werden. Auf dieser Grundlage kann dann sowohl der Aufladungszeitraum, der vorzugsweise entkoppelt vom Produktionsprozess ist, als auch der Produktionsprozess selbst umgesetzt werden, ohne dass weitere konstruktive Anpassungen bzw. Umrüstungen beim Übergang vom Aufladungszeitraum zum Produktionsprozess an der erfindungsgemäßen Anlage umgesetzt werden müssen.

Bei einer weiteren, bevorzugten Ausgestaltung der Erfindung ist wenigstens eine Umwandlungseinrichtung zum zumindest teilweisen Umwandeln der Wärmeenergie der erhitzen Schmelze und/oder des erhitzten Behandlungsbades in elektrischen Strom vorgesehen, vorzugweise wobei die Umwandlungseinrichtung dazu ausgebildet ist, den umgewandelten elektrischen Strom wieder dem Stromnetz zurückzuführen.

Die vorliegende Erfindung betrifft im Hinblick auf die obigen Besonderheiten bzw. Vorteile, auch die Verwendung einer vorzugsweise metallischen Schmelze und/oder eines Behandlungsbades, vorzugsweise eines Flussmittelbades, als Wärme-und/oder Pufferspeicher, wobei die Schmelze und/oder das Behandlungsbad durch Überschussstrom aus einem Stromnetz thermisch aufgeladen und/oder erhitzt wird bzw. werden und wobei die erhitzte Schmelze und/oder das erhitzte Behandlungsbad in einem industriellen Produktionsprozess, vorzugsweise einem Beschichtungsprozess, wie einer Verzinkung, vorzugsweise Feuerverzinkung mit vorgelagerter Flussmittelbehandlung, vorgehalten und/oder bereitgestellt wird bzw. werden.

Dadurch können die oben geschilderten Vorteile entsprechend realisiert werden.

Weitere Merkmale, Vorteile und Anwendungsmöglichkeiten der vorliegenden Erfindung ergeben sich aus der nachfolgenden Beschreibung von Ausführungsbeispielen anhand der Zeichnungen und der Zeichnungen selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: eine schematische Darstellung einer erfindungsgemäßen Anlage und des Ablaufs des erfindungsgemäßen Verfahrens während eines Aufladungszeitraums und
- Fig. 2: eine schematische Darstellung einer erfindungsgemäßen Anlage und des Ablaufs des erfindungsgemäßen Verfahrens während eines ersten Verfahrensschritts in einem Produktionsprozess,
- Fig. 3: eine weitere schematische Darstellung der erfindungsgemäßen Anlage und des Ablaufs des erfindungsgemäßen Verfahrens während eines zweiten Verfahrensschritts im Produktionsprozess und
- Fig. 4: eine weitere schematische Darstellung der erfindungsgemäßen Anlage und des Ablaufs des erfindungsgemäßen Verfahrens während eines dritten Verfahrensschritts im Produktionsprozess.

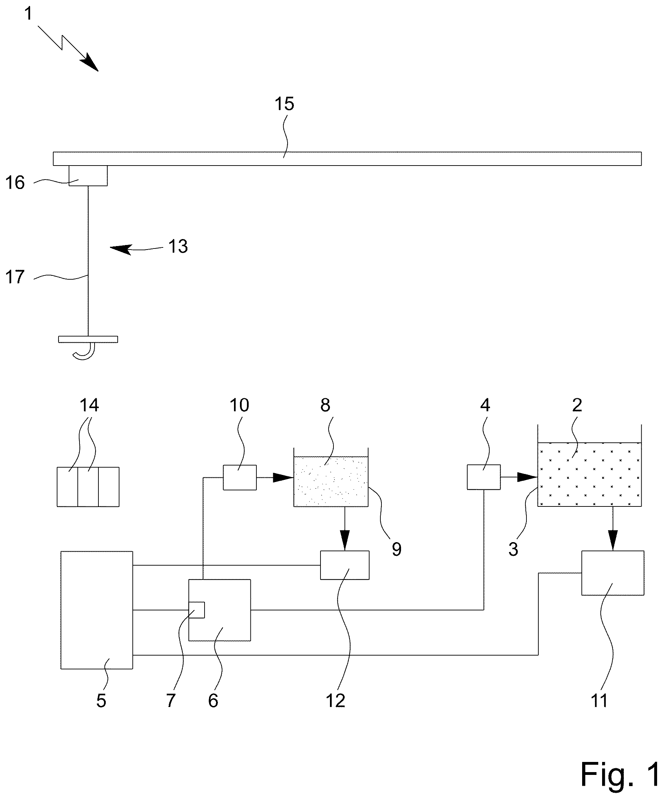

In Fig. 1 ist eine erfindungsgemäße Anlage 1 zum Betreiben eines industriellen Produktionsprozesses unter Einsatz einer Schmelze 2 schematisch dargestellt.

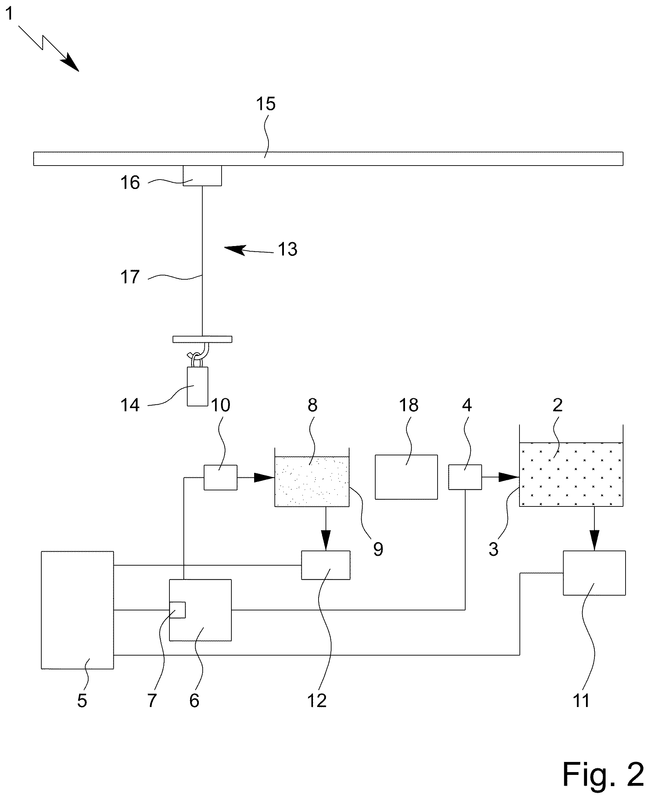

In Fig. 1 ist dabei das erfindungsgemäße Verfahren während eines Aufladungszeitraums dargestellt, wohingegen in den Figuren 2 bis 4 der Ablauf des Produktionsprozesses dargestellt ist, welcher vorzugsweise dem Aufladungszeitraum nachgelagert ist.

Nachfolgend werden zunächst Komponenten bzw. Einrichtungen der erfindungsgemäßen Anlage 1 beschrieben, um auf dieser Grundlage anschließend den Ablauf des erfindungsgemäßen Verfahrens unter Einsatz der erfindungsgemäßen Anlage 1 zu erörtern.

In diesem Zusammenhang ist darauf hinzuweisen, dass es sich bei den gezeigten und beschriebenen Abläufen um ein nach der Erfindung mögliches Verfahren handelt, einzelne Verfahrensschritte aber auch weggelassen oder in einer anderen Reihenfolge als dargestellt und nachfolgend beschrieben, vorgesehen sein können. Auch können weitere Verfahrensschritte vorgesehen sein. Im Übrigen ist es so, dass nicht alle Verfahrensschritte grundsätzlich in einer räumlich zusammengefassten Anlage 1 vorgesehen sein müssen. Auch die dezentrale Realisierung einzelner Verfahrensstufen ist möglich.

Die erfindungsgemäße Anlage 1 weist einen Kessel 3 für die zu beheizende Schmelze 2 auf.

Die Schmelze 2 ist vorzugsweise als Tauchbad, insbesondere Verzinkungsbad, ausgebildet bzw. wird in einem metallischen Beschichtungsprozess, wie einer Verzinkung, insbesondere Feuerverzinkung, eingesetzt. Dementsprechend wird die beheizte Schmelze 2 als Beschichtungsmasse bereitgestellt und/oder vorgehalten.

Zum Beheizen der Schmelze 2 weist die Anlage 1 wenigstens eine elektrische Beheizungseinrichtung 4, vorzugsweise eine Vielzahl von elektrischen Beheizungseinrichtungen 4, auf.

Die elektrische Beheizungseinrichtung 4 ist dementsprechend an ein Stromnetz 5 anschließbar. Das Stromnetz 5 ist vorzugsweise ein öffentliches Stromnetz 5. Bevorzugt stellt das Stromnetz 5 bzw. die elektrische Energiequelle zumindest teilweise aus erneuerbaren Energien hergestellten Strom zur Verfügung, der bedarfsweise in das Stromnetz 5 eingespeist wird.

Nicht im Einzelnen dargestellt ist, dass die Anlage 1 auch wenigstens eine nicht-elektrische Beheizungseinrichtung, vorzugsweise zum Verbrennen eines Brenngases bzw. mittels wenigstens eines Gasbrenners, aufweist, um die Schmelze 2 zusätzlich zur elektrischen Beheizungseinrichtung 4 aufzuheizen. Die nicht-elektrische Beheizungseinrichtung ist ebenfalls an eine Energiequelle, vorzugsweise eine Gasquelle, angeschlossen. Mittels der Energiequelle kann Brenngas, beispielsweise Erdgas, insbesondere mit Wasserstoff vermischtes Erdgas oder reiner Wasserstoff, zum Betreiben der nicht-elektrischen Beheizungseinrichtung zur Verfügung gestellt werden.

Die erfindungsgemäße Anlage 1 weist vorzugsweise eine Steuer- und/oder Regelungseinrichtung 6 zur Beheizung der Schmelze 2 mittels der elektrischen Beheizungseinrichtung 4 auf.

Die Steuer- und/oder Regelungsvorrichtung 6 ist dazu ausgebildet, einen in einem Stromnetz 5 anfallenden Überschussstrom zumindest teilweise zu entnehmen und die elektrische Beheizungseinrichtung 4 mit dem entnommenen Überschussstrom zu betreiben, insbesondere in Kombination mit der nicht-elektrischen Beheizungseinrichtung.

Zur vorzugsweisen automatischen und/oder frequenz- bzw. internetgesteuerten Detektion des Überschussstroms weist die Steuer- und/oder Regelungseinrichtung 6 eine Detektionseinrichtung 7 zur Detektion des Auftretens des Überschussstroms auf. Unter einer Detektionseinrichtung 7 wird auch eine solche Einrichtung verstanden, die zum Empfang von Signalen, die vom Netzbetreiber oder einem Dritten ausgesendet werden, verstanden, wobei die Aussendung eines Signals automatisch erfolgt, in Stromspitzen oder Überschussstrom im Netz vorliegt oder sich derartiges ankündigt. Signale dieser Art werden vom Netzbetreiber oder Dritten automatisch generiert und übersandt.

Die Detektionseinrichtung 7 und die Steuer- und/oder Regelungseinrichtung 6 sind vorzugsweise signaltechnisch miteinander verbunden.

Es kann jedoch auch eine vorzugsweise signaltechnische und/oder funktionelle Entkopplung der Detektionseinrichtung 7 von der Steuer- und/oder Regelungseinrichtung 6 vorgesehen sein. Insbesondere ist die Detektionseinrichtung 7 dann einem Netzbetreiber zugewiesen, wobei seitens des Netzbetreibers bei Vorliegen von Überschussstrom dieser dem Betreiber der Anlage 1 zur Verfügung gestellt und über das Stromnetz 5 der Steuer- und/oder Regelungseinrichtung 6 zugeleitet wird.

Die Steuer- und/oder Regelungseinrichtung 6 ist dazu ausgebildet, die durch die elektrische Beheizungseinrichtung 4 und die gegebenenfalls nicht-elektrische Beheizungseinrichtung in die Schmelze 2 eingebrachte Wärmeenergie zu steuern und/oder zu regeln, und zwar in Abhängigkeit zu dem im Stromnetz 5 anfallenden Überschussstrom und/oder der Temperatur der Schmelze 2. Besonders bevorzugt erfolgt die Regelung bzw. Steuerung derart, dass über das gesamte Auftreten des Überschussstroms ein insbesondere konstanter Wärmeeintrag in die Schmelze 2 erfolgt und/oder eine konstante definierte Aufladungstemperatur der Schmelze 2 sichergestellt ist. Es kann jedoch auch eine variable Aufladungstemperatur umgesetzt werden, insbesondere sofern zeitlich schwankender Überschussstrom durch das Stromnetz 5 bereitgestellt wird.

Hierzu ist die Steuer- und/oder Regelungseinrichtung 6 dazu ausgebildet, bei Auftreten und/oder Detektion des Überschussstroms die Leistung der elektrischen Beheizungseinrichtung 4 hochzufahren und bedarfsweise die Leistung der nicht-elektrischen Beheizungseinrichtung zu reduzieren, insbesondere in Abhängigkeit zum Grad des im Stromnetz 5 anfallenden Überschussstroms.

Dies kann dazu führen, dass die Schmelze 2 überhitzt wird und/oder in einer die Verarbeitungstemperatur im Produktionsprozess übersteigenden Aufladungstemperatur bereitgestellt und/oder vorgehalten wird, insbesondere wobei die Aufladungstemperatur die Verarbeitungstemperatur um wenigstens 10 °C übersteigt.

Beim dargestellten bevorzugten Ausführungsbeispiel weist die erfindungsgemäße Anlage 1 ein Behandlungsbad 8 auf, welches vorliegend als Flussmittelbad ausgebildet und in einem weiteren Kessel 9 aufgenommen ist. Der weitere Kessel 9 mit dem Behandlungsbad 8 ist prozesstechnisch dem Kessel 3 mit der Schmelze 2 vor- oder nachgelagert.

Besonders bevorzugt ist wenigstens eine weitere Beheizungseinrichtung 10 vorgesehen, die zum thermischen Aufladen und/oder Beheizen des Behandlungsbades 8 vorgesehen ist. Die weitere elektrische Beheizungseinrichtung 9 ist vorzugsweise mit der Steuer- und/oder Regelungseinrichtung 6 signaltechnisch verbunden, so dass der im Stromnetz 5 anfallende Überschussstrom zumindest teilweise entnommen und die elektrische Beheizungseinrichtung 8 durch den Überschussstrom betrieben werden kann.

Nicht dargestellt ist, dass wenigstens eine weitere nicht-elektrische Beheizungseinrichtung vorgesehen sein kann, vorzugsweise zum Verbrennen eines Brenngases bzw. ausgebildet als Gasbrenner, um gegebenenfalls zusätzlich zur weiteren elektrischen Beheizungseinrichtung 10 einen Wärmeeintrag in das zu beheizende Behandlungsbad 8 umzusetzen. Die weitere nicht-elektrische Beheizungseinrichtung ist an eine Energiequelle, vorzugsweise eine Gasquelle und/oder an die Steuer- und/oder Regelungseinrichtung 6, angeschlossen und kann mit Brenngas, beispielsweise Erdgas, insbesondere mit Wasserstoff vermischtem Erdgas oder reinem Wasserstoff, betrieben werden.

Die Steuer- und/oder Regelungseinrichtung 6 ist dazu ausgebildet, die durch die weitere elektrische Beheizungseinrichtung 10 und die gegebenenfalls weitere nicht-elektrische Beheizungseinrichtung in das Behandlungsbad 8 eingebrachte Wärmeenergie zu regeln und/oder zu steuern, und zwar in Abhängigkeit zu den im Stromnetz 5 anfallenden Überschussstrom und/oder der Temperatur des Behandlungsbades 8. Besonders bevorzugt erfolgt die Regelung bzw. Steuerung derart, dass über das gesamte Auftreten des Überschussstroms ein insbesondere konstanter Wärmeeintrag in das Behandlungsbad 8 erfolgt und/oder eine konstante definierte Aufladungstemperatur des Behandlungsbades 8 sichergestellt ist. Es kann jedoch auch eine variable Aufladungstemperatur umgesetzt werden, insbesondere sofern zeitlich überschwankender Überschussstrom durch das Stromnetz 5 bereitgestellt wird.

Besonders bevorzugt erfolgt im Aufladungszeitraum zeitlich entkoppelt oder einander überschneidend sowohl eine thermische Aufladung der Schmelze 2 als auch des Behandlungsbades 8, insbesondere in Abhängigkeit zu dem im Stromnetz 5 auftretenden Überschussstrom. Aufgrund der vergleichsweise hohen Wärmekapazität der Schmelze 2 und des Behandlungsbades 8 fungieren die in Rede stehende Prozessflüssigkeiten als effiziente Wärmespeicher zur Vorhaltung im sich vorzugsweise anschließenden Produktionsprozess.

Besonders bevorzugt weist die Anlage 1 wenigstens eine Umwandlungseinrichtung 11 zum zumindest teilweisen Umwandeln der Wärmeenergie der erhitzten Schmelze 2 in elektrischen Strom auf, vorzugsweise wobei die Umwandlungseinrichtung 11 dazu ausgebildet ist, den umgewandelten elektrischen Strom wieder dem Stromnetz 5 zuzuführen.

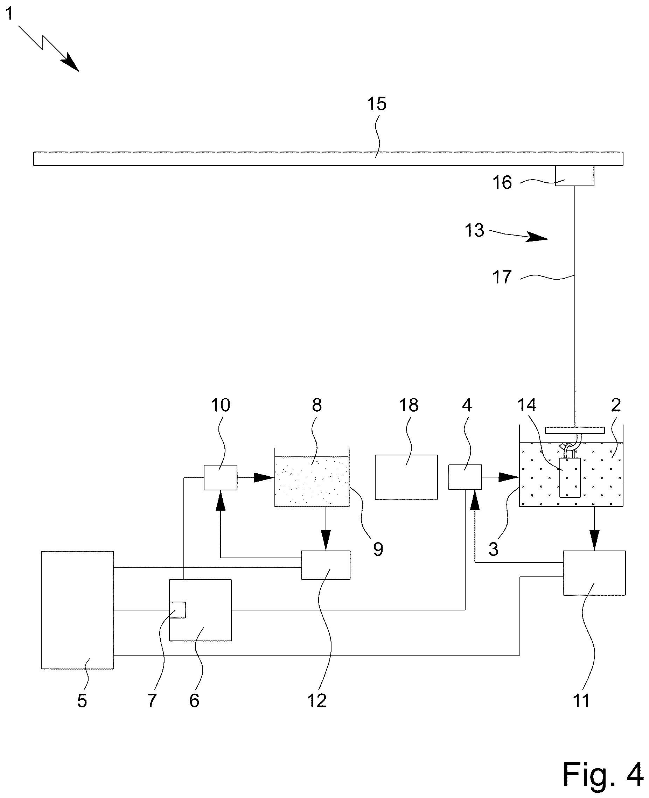

So kann, wie anhand von Fig. 4 verdeutlicht, der mittels der Umwandlungseinrichtung 11 umgewandelte elektrische Strom zumindest teilweise, während des Produktionsbetriebs, zum Betreiben der elektrischen Beheizungseinrichtung 4 genutzt bzw. verwendet werden. Es ist auch eine vollständige Nutzung des mittels der Umwandlungseinrichtung 11 umgewandelten elektrischen Stroms zum Betreiben der elektrischen Beheizungseinrichtung 4 möglich. Dann erfolgt keine Zurückspeisung in das Stromnetz. Es ist jedoch auch eine kombinierte Nutzung des mittels der Umwandlungseinrichtung 11 umgewandelten elektrischen Stroms, und zwar zum Betreiben der elektrischen Beheizungseinrichtung 4 einerseits sowie zur Zurückspeisung in das Stromnetz 5 andererseits möglich.

Beim dargestellten bevorzugten Ausführungsbeispiel ist wenigstens eine weitere Umwandlungseinrichtung 12 zum zumindest teilweisen Umwandeln der Wärmeenergie des erhitzten Behandlungsbades 8 in elektrischen Strom vorgesehen, vorzugsweise wobei die weitere Umwandlungseinrichtung 12 dazu ausgebildet ist, den umgewandelten elektrischen Strom wieder in das Stromnetz 5 einzuspeisen.

Die Umwandlung bzw. Rückführung der Wärme aus der Schmelze und/oder aus dem Behandlungsbad zurück in elektrische Energie mittels der Umwandlungseinrichtung 11 bzw. 12 erweist sich besonders dann als zweckmäßig, wenn eine Abkühlung der überhitzten Schmelze 2 bzw. des überhitzten Behandlungsbades 8 erfolgt, beispielsweise im Vorfeld des unmittelbar anstehenden Produktionsprozesses auf die Verarbeitungstemperatur. Auch zur Vermeidung einer Überhitzung der Schmelze 2 bzw. des Behandlungsbades 8 kann die Rückverstromung der Wärmeenergie der Schmelze 2 und/oder des Behandlungsbades 8 mittels der Umwandlungseinrichtung 11, 12 erfolgen. Die ungenutzte Abgabe von Wärmeenergie an die Umgebung kann dadurch vermieden werden.

Auch im Hinblick auf die weitere Umwandlungseinrichtung 12 ist anzumerken, dass der mittels der weiteren Umwandlungseinrichtung 12 umgewandelte elektrische Strom zumindest teilweise zum Betreiben der weiteren elektrischen Beheizungseinrichtung 10 genutzt werden kann. Es ist auch eine vollständige bzw. ausschließliche Nutzung des mittels der weiteren Umwandlungseinrichtung 12 umgewandelten elektrischen Strom zum Betreiben der weiteren elektrischen Beheizungseinrichtung 10 möglich. Dann entfällt die Zurückspeisung in das Stromnetz 5. Es ist jedoch auch eine Kombination aus der Zurückspeisung des umgewandelten elektrischen Stroms in das Stromnetz 5 sowie das Betreiben der elektrischen Beheizungseinrichtung 10 mittels des durch die weitere Umwandlungseinrichtung 12 umgewandelten elektrischen Stroms möglich.

Zu Zwecken der Regelung bzw. Ansteuerung kann wenigstens eine Umwandlungseinrichtung 11, 12 an die Steuer- und/oder Regelungseinrichtung 6 angeschlossen sein. So kann die Umwandlung beispielsweise bei einer bestimmten Umwandlungstemperatur mittels der Steuer- und/oder Regelungseinrichtung 6 initiiert werden, die vorzugsweise eine Maximaltemperatur definiert, so dass vor dem Erhitzen der Schmelze 2 bzw. des Behandlungsbades 8 über die jeweilige Siedetemperatur hinaus bzw. nach Erreichen eines vorgegebenen maximalen Temperaturwertes unterhalb der jeweiligen Siedetemperatur das thermische Aufladen beendet und die Rückverstromung unter Nutzung der Umwandlungseinrichtung 11, 12 initiiert wird.

Die erfindungsgemäße Anlage 1 weist wenigstens eine Taucheinrichtung 13 zum Ein- und/oder Austauchen eines Bauteils 14 in die Schmelze 2 und/oder aus der Schmelze 2 auf. Die Taucheinrichtung 13 ist auch zum Ein- und/oder Austauchen des Bauteils 14 in das Behandlungsbad 8 und/oder aus dem Behandlungsbad 8 entsprechend ausgebildet.

Beim dargestellten und bevorzugten Ausführungsbeispiel ist die Taucheinrichtung 13 zum Ein- und/oder Austauchen sowie zum Transport wenigstens eines Bauteils 14 oder einer Gruppe von Bauteilen 14 entlang einzelner Prozessbereiche ausgebildet. Dementsprechend weist die Taucheinrichtung 13 ein Fördermittel 5, vorzugsweise ausgebildet als Schienenführung, auf. An dem Fördermittel 15 ist, beispielsweise über eine Laufkatze 16, ein Hub- und/oder Senkmittel 17, beispielsweise ein Hubseil, verfahrbar. Über das Hub- und/oder Senkmittel 17 ist ein Bauteil 14 oder eine Gruppe von Bauteilen 14 anbind- und/oder aufhängbar, beispielsweise über einen Haken, und in Prozessrichtung zunächst dem Behandlungsbad 8 und dann der Schmelze zuführbar. Es versteht sich, dass eine Vielzahl weiterer Behandlungsbäder bzw. Behandlungseinrichtungen dem Behandlungsbad 8 bzw. der Schmelze vor- oder nachgelagert sein können, wobei die Taucheinrichtung 13 auch zum Zuführen des Bauteils 14 auch in diese weiteren Behandlungsbäder bzw. Behandlungseinrichtungen ausgebildet ist.

Dies vorausgeschickt, wird nachfolgend das erfindungsgemäße Verfahren unter Einsatz der erfindungsgemäßen Anlage 1 beschrieben.

In Fig. 1 ist der Aufladungszeitraum zur thermischen Aufladung der Schmelze 2 und, vorzugsweise, des Behandlungsbades 8 dargestellt. In Fig. 2 ist ein dem Aufladungszeitraum vor- oder nachgelagerter, vorzugsweise nachgelagerter, Produktionsprozess unter Nutzung der erhitzten Schmelze 2 und, vorzugsweise, des erhitzten Behandlungsbades 8 schematisch dargestellt. Es versteht sich jedoch, dass der Aufladungszeitraum und der Produktionsprozess auch einander überlagernd bzw. gleichzeitig umgesetzt werden können.

Erfindungsgemäß ist im Aufladungszeitraum vorgesehen, dass bei Auftreten eines im Stromnetz 5 anfallenden Überschussstroms dieser dem Stromnetz 5 zumindest teilweise entnommen und zum Betreiben der elektrischen Beheizungseinrichtung 4 und der weiteren elektrischen Beheizungseinrichtung 10 genutzt wird.

Das Vorliegen des Überschussstroms wird dabei durch die Detektionseinrichtung 7 detektiert, mit der Folge, dass die Regelung bzw. Steuerung der Beheizungseinrichtungen 4, 10 vorzugsweise ausschließlich unter Nutzung des entnommenen Überschussstroms erfolgt.

Konkret ist dabei vorgesehen, dass die Steuer- und/oder Regelungseinrichtung 6 dazu ausgebildet ist, die elektrische Beheizungseinrichtungen 4, 10 unter Verwendung des dem Stromnetz 5 entnommenen Überschussstroms zu betreiben.

Dadurch erfolgt eine vorzugsweise ausschließlich strombasierte bzw. ausschließlich über die elektrische Beheizungseinrichtungen 4, 10 umgesetzte Beheizung bzw. Aufheizung der Schmelze 2 und des Behandlungsbades 8 unter Nutzung des Überschussstroms. Dies erfolgt in einem Aufladungszeitraum, der vorzugsweise tagsüber, das heißt zwischen 6.00 und 18.00 Uhr, erfolgt und vorzugsweise außerhalb des Produktionsprozesses durchgeführt wird.

Die Beheizung der Schmelze 2 bzw. des Behandlungsbades 8 kann dabei vorzugsweise ununterbrochen über einen Zeitraum von wenigstens fünf Stunden pro Tag erfolgen. Es versteht sich jedoch, dass auch, je nach Intensität des vorliegenden Überschussstroms im Stromnetz 5, Unterbrechungen im Rahmen der Beheizung vorliegen können.

Die Ansteuerung der Beheizungseinrichtungen 4, 10 kann prinzipiell ohne die Maßgabe einer definierten Zieltemperatur erfolgen und flexibel gewählt werden, insbesondere in Abhängigkeit zu dem im Stromnetz 5 anfallenden Überschussstrom. Vorgesehen und bevorzugt erfolgt die Erhitzung der Schmelze 2 bzw. des Behandlungsbades 8 unter der Maßgabe einer definierten Aufladungstemperatur, die als Führungsgröße bzw. Zielgröße in der Steuer- und/oder Regelungseinrichtung 6 verarbeitet wird. Es versteht sich, dass diesbezüglich eine Temperaturaufzeichnung der Schmelze 2 und/oder des Behandlungsbades 8 erfolgt, die mit der Steuer- und/oder Regelungseinrichtung 6 signaltechnisch gekoppelt ist.

Es hat sich als zweckmäßig erwiesen, die Schmelze 2 und/oder das Behandlungsbad 8 bei einer Aufladungstemperatur bereitzustellen bzw. vorzuhalten, die eine im Produktionsprozess vorliegende Verarbeitungstemperatur der Schmelze 2 und/oder des Behandlungsbades 8 übersteigt, vorzugsweise um wenigstens 10 °C, insbesondere wenigstens 20 °C, besonders bevorzugt um wenigstens 50 °C übersteigt. Im Aufladungszeitraum ist, im Gegensatz zum Produktionsprozess, keine exakte Vorgabe im Hinblick auf die Erhitzungstemperatur der Schmelze 2 bzw. des Behandlungsbades 8 einzuhalten, so dass eine entsprechende Überhitzung der Schmelze 3 und/oder des Behandlungsbades 8 im Aufladungszeitraum umgesetzt werden kann und auf diese Weise auch stark anfallender Überschussstrom zur thermischen Aufladung genutzt werden kann.

Anhand von Fig. 2 wird nachfolgend das erfindungsgemäße Verfahren unter Einsatz der erfindungsgemäßen Anlage 1 während eines Produktionsprozesses beschrieben.

Das zu beschichtende bzw. zu verzinkende Bauteil 14 wird an die Taucheinrichtung 13 bzw. an einen Warenträger der Taucheinrichtung 13 angebunden. Der Warenträger ist vorliegend hakenförmig ausgebildet. Auch ist es möglich, dass der Warenträger einen Korb, ein Gestell oder dergleichen aufweist, in den bzw. in das das Bauteil 14 oder eine Gruppe von Bauteilen 14 eingelegt werden kann bzw. können.

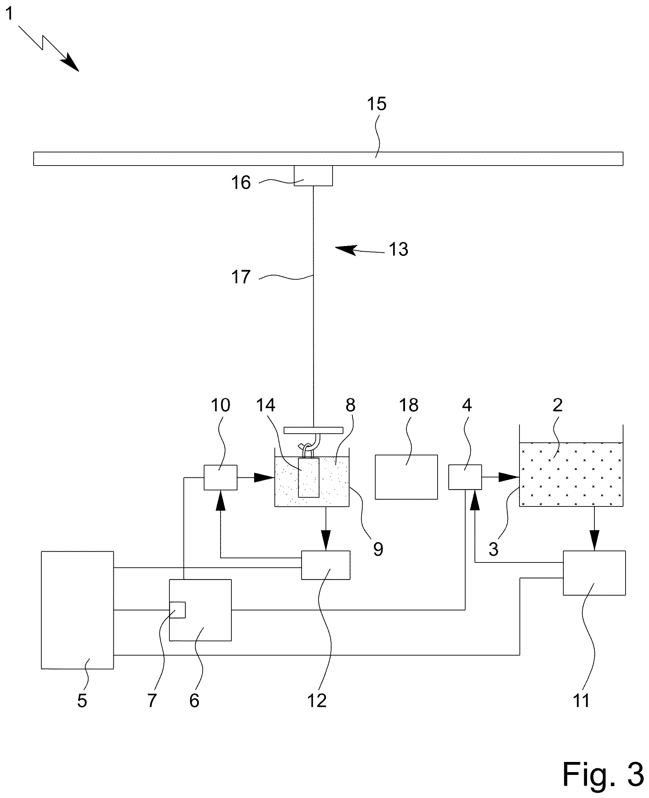

Wie in Fig. 3 dargestellt, wird das Bauteil 14 dann dem Behandlungsbad 8 zugeführt, insbesondere wobei das Bauteil 14 in dem Behandlungsbad 8 einer Flussmittelbehandlung unterzogen wird. Die Flussmittelbehandlung erfolgt in einer wässrigen Flussmittellösung.

Das Behandlungsbad 8 ist vorzugsweise im Rahmen des vorgelagerten Aufladungszeitraums erhitzt worden. Es versteht sich jedoch, dass das Behandlungsbad 8 auch während des Produktionsprozesses zumindest teilweise mit aus dem Stromnetz 5 entnommenen Überschussstrom erhitzt werden kann, vorzugsweise mittels der elektrischen Beheizungseinrichtung 10. Durch die Steuer-und/oder Regelungseinrichtung 6 ist sichergestellt, dass das Behandlungsbad 8 auf eine definierte Verarbeitungstemperatur unter der zumindest teilweisen Nutzung des Überschussstroms geregelt wird.

Es ist anzumerken, dass im Vorfeld der Flussmittelbehandlung auch weitere, vorgelagerte Verfahrensschritte durchgeführt werden können, insbesondere ein Spülschritt und/oder ein Beizschritt. Vorzugsweise kann weiterhin auch eine Entfettung der Bauteile, beispielsweise mittels eines alkalischen oder eines sonstigen Entfettungsmittels umgesetzt werden, um Rückstände von Fetten und Ölen an dem Bauteil 14 zu beseitigen.

Nach einer hinreichenden Verweildauer im Behandlungsbad 8 wird das Bauteil 14 mittels des Fördermittels 15 der Taucheinrichtung 13 einem Trocknungsofen 18 zugeführt, um einen festen Behandlungsfilm bzw. Flussmittelfilm auf der Oberfläche des Bauteils 14 zu erzeugen und anhaftendes Wasser zu entfernen. Die der Schmelzbehandlung vorgelagerte Trocknung ist wichtig, um einen effizienten nachgelagerten Beschichtungsprozess mittels der Schmelze 2 sicherzustellen.

Nach der Trocknung im Trocknungsofen 18 wird das Bauteil 14 mittels der Taucheinrichtung 13 bzw. des Fördermittels 15 in die Schmelze 2 eingetaucht und dadurch einer Beschichtungsbehandlung, vorzugsweise einer Feuerverzinkung, unterzogen.

Es ist anzumerken und nicht im Einzelnen dargestellt, dass auch der Trocknungsofen 18 mittels aus dem Stromnetz 5 entnommenen Überschussstroms betrieben werden kann. Hierzu kann eine Beheizungseinrichtung, vorzugsweise elektrische Beheizungseinrichtung vorgesehen sein, die wiederum mit der Steuerung- und/oder Regelungseinrichtung 6 verbunden ist, um den Trocknungsofen 18 zumindest teilweise durch Nutzung von aus dem Stromnetz 5 anfallenden Überschussstrom elektrisch aufzuladen.

Die Schmelze 2 ist als erhitzter Wärmespeicher im Aufladungszeitraum mittels des aus dem Stromnetz 5 entnommenen Überschussstroms aufgeladen worden. Im Rahmen des Produktionsprozesses wird über die Steuer- und/oder Regelungseinrichtung 6 sichergestellt, dass die Schmelze 2 in einer definierten Verarbeitungstemperatur vorgehalten wird. Auch während des Produktionsprozesses kann die Schmelze 2, zumindest teilweise, mittels der elektrischen Beheizungseinrichtung 4 und durch aus dem Stromnetz 5 entnommenen Überschussstrom erhitzt werden.

Nach der Beschichtungsbehandlung des Bauteils 14 bzw. der Verzinkung kann das Bauteil 14 in einem nachgelagerten Schritt abgeschreckt werden. An das Abschrecken kann sich auch eine Nachbehandlung anschließen, bei der es sich beispielsweise um eine Passivierung, Versiegelung oder organische oder anorganische Beschichtung des beschichteten bzw. verzinkten Bauteils 14 handeln kann. Die Nachbehandlung schließt aber auch eine möglicherweise vorzunehmende Nachbearbeitung des Bauteils 14 an.

Die Durchführung des Produktionsprozesses, insbesondere der Verzinkung, erfolgt vorzugsweise unter Nutzung der erhitzten Schmelze 2 und, insbesondere, des erhitzten Behandlungsbades 8, welche im Rahmen der vorgelagerten Aufladung unter Nutzung des Überschussstroms entsprechend aufgeladen worden sind.

Es versteht sich jedoch, dass die Aufladung und die Produktion mittels der erfindungsgemäßen Anlage 1 zumindest zeitweise einander überschneidend bzw. parallel zueinander umgesetzt werden kann, wobei während bzw. bei laufendem Produktionsprozess die Schmelze 2 und/oder das Behandlungsbad 8 zumindest teilweise mittels Überschussstrom erhitzt werden.

Insofern können die Schmelze 2 und/oder das Behandlungsbad 8 auch bei laufendem Produktionsprozess als Wärme- und/oder Pufferspeicher fungieren, die bei laufendem Produktionsprozess durch Überschussstrom aus dem Stromnetz 5 kontinuierlich und/oder diskontinuierlich entsprechend aufgeladen und auf eine definierte Verarbeitungstemperatur geregelt werden.

### Bezugszeichenliste:

- 1: Anlage
- 2: Schmelze
- 3: Kessel
- 4: elektrische Beheizungseinrichtung
- 5: Stromnetz
- 6: Steuer- und/oder Regelungseinrichtung
- 7: Detektionseinrichtung
- 8: Behandlungsbad
- 9: weiterer Kessel
- 10: weitere Beheizungseinrichtung
- 11: Umwandlungseinrichtung
- 12: weitere Umwandlungseinrichtung
- 13: Taucheinrichtung
- 14: Bauteil
- 15: Fördermittel
- 16: Laufkatze
- 17: Hub- und/oder Senkmittel
- 18: Trocknungsofen

### Aspekte der vorliegenden Erfindung:

Die vorliegende Erfindung wird durch die nachfolgend beschriebenen Aspekte 1 bis 15 weiterführend beschrieben und charakterisiert:

### Aspekt 1:

1. Verfahren zur Nutzung von in einem Stromnetz (5) anfallenden Überschussstrom,
   wobei der Überschussstrom dem Stromnetz (5) zumindest teilweise entnommen und zumindest eine Schmelze (2), insbesondere eine Metallschmelze, durch den entnommenen Überschussstrom thermisch aufgeladen und/oder erhitzt wird und
   wobei die erhitzte Schmelze (2) sowohl als elektrischer Wärmespeicher als auch zur Verarbeitung in einem industriellen Produktionsprozess, vorzugsweise einem Beschichtungsprozess, wie einer Verzinkung, insbesondere Feuerverzinkung, vorgehalten und/oder bereitgestellt wird.

### Aspekt 2:

2. Verfahren nach Aspekt 1, dadurch gekennzeichnet,
dass wenigstens ein der Schmelze (2) vor- oder nachgelagertes Behandlungsbad (8), insbesondere ein der Schmelze (2) vorgelagertes Flussmittelbad, durch den entnommenen Überschussstrom thermisch aufgeladen und/oder erhitzt wird, insbesondere wobei das erhitzte Behandlungsbad (8) sowohl als elektrischer Wärmespeicher als auch zur Verarbeitung im industriellen Produktionsprozess vorgehalten und/oder bereitgestellt wird.

### Aspekt 3:

3. Verfahren nach Aspekt 1 oder Aspekt 2, dadurch gekennzeichnet,
dass Wärmeenergie der erhitzten Schmelze (2) und/oder des erhitzten Behandlungsbades (8) zumindest teilweise wieder entnommen und mittels wenigstens einer Umwandlungseinrichtung (11, 12) in elektrischen Strom umgewandelt wird, vorzugsweise wobei der umgewandelte elektrische Strom dem Stromnetz (5) wieder zugeführt wird.

### Aspekt 4:

4. Verfahren nach einem der vorhergehenden Aspekte, dadurch gekennzeichnet, dass die Beheizung der Schmelze (2) und/oder des Behandlungsbades (8) und/oder die Wärmeentnahme aus der Schmelze (2) und/oder aus dem Behandlungsbad (8) dem Produktionsprozess vor- oder nachgelagert und/oder von dem Produktionsprozess entkoppelt ist.

### Aspekt 5:

5. Verfahren nach einem der vorhergehenden Aspekte, dadurch gekennzeichnet, dass die Beheizung der Schmelze (2) und/oder des Behandlungsbades (8) zur Aufladung mit Überschussstrom zumindest zeitweise in einem Aufladungszeitraum zwischen 10.00 Uhr und 16.00 Uhr, vorzugsweise 9.00 Uhr bis 17.00 Uhr und insbesondere zwischen 6.00 Uhr bis 18.00 Uhr, erfolgt, insbesondere wobei der Produktionsprozess außerhalb des Aufladungszeitraums und/oder entkoppelt von Aufladungszeitraum erfolgt.

### Aspekt 6:

6. Verfahren nach einem der vorhergehenden Aspekte, dadurch gekennzeichnet, dass die Beheizung der Schmelze (2) und/oder des Behandlungsbades (8) und/oder die Wärmeentnahme aus der Schmelze (2) und/oder aus dem Behandlungsbades (8) über einen Zeitraum von wenigstens 1 Stunde / Tag, vorzugsweise wenigstens 5 Stunden / Tag, erfolgt.

### Aspekt 7:

7. Verfahren nach einem der vorhergehenden Aspekte, dadurch gekennzeichnet, dass das Auftreten des Überschussstroms über eine Detektionseinrichtung (7) detektiert und die Schmelze (2) und/oder das Behandlungsbad (8) vorzugsweise automatisch mittels wenigstens einer elektrischen Beheizungseinrichtung (4) und/oder einer weiteren elektrischen Beheizungseinrichtung (10) erhitzt wird bzw. werden, vorzugsweise derart, dass die beheizte Schmelze (2) und/oder das beheizte Behandlungsbad (8) unter Nutzung von Überschussstrom in einer Aufladungstemperatur bereitgestellt und/oder vorgehalten wird bzw. werden, besonders bevorzugt wobei die Beheizung der Schmelze (2) und/oder des Behandlungsbades (8) ausschließlich durch die elektrische Beheizungseinrichtung (4) und/oder der weiteren elektrischen Beheizungseinrichtung (10) unter Nutzung von Überschussstrom erfolgt.

### Aspekt 8:

8. Verfahren nach einem der vorhergehenden Aspekte, dadurch gekennzeichnet, dass die Schmelze (2) und/oder das Behandlungsbad (8) bei einer Aufladungstemperatur bereitgestellt und/oder vorgehalten wird bzw. werden, die eine im Produktionsprozess vorliegende Verarbeitungstemperatur der Schmelze (2) und/oder des Behandlungsbades (8) übersteigt, vorzugsweise um wenigstens 10 °C, insbesondere wenigstens um 20 °C, besonders bevorzugt wenigstens um 50 °C, übersteigt.

### Aspekt 9:

9. Verfahren nach einem der vorhergehenden Aspekte, dadurch gekennzeichnet, dass die Verarbeitungstemperatur wenigstens 10 °C, vorzugsweise wenigstens 20 °C, besonders bevorzugt wenigstens 30 °C, ganz besonders bevorzugt 50 °C, oberhalb einer Schmelztemperatur der Schmelze (2) und/oder des Behandlungsbades (8) liegt.

### Aspekt 10:

10. Verfahren nach einem der vorhergehenden Aspekte, dadurch gekennzeichnet, dass die Aufladungstemperatur wenigstens 10 °C, vorzugsweise wenigstens 20 °C, besonders bevorzugt wenigstens 30 °C, ganz besonders bevorzugt wenigstens 50 °C unterhalb einer Siedetemperatur der Schmelze (2) und/oder des Behandlungsbades (8) liegt.

### Aspekt 11:

11. Verfahren nach einem der vorhergehenden Aspekte, dadurch gekennzeichnet, dass die Aufladungstemperatur der Schmelze (2) im Bereich von 390 °C bis 900 °C, vorzugsweise im Bereich von 430 °C bis 880 °C, besonders bevorzugt im Bereich von 500 °C bis 850 °C, liegt und/oder dass die Aufladungstemperatur des Behandlungsbades (8) im Bereich von 60 °C bis 200 °C, vorzugsweise im Bereich von 80 °C bis 180 °C, besonders bevorzugt im Bereich von 100 °C bis 150 °C, liegt.

### Aspekt 12:

12. Anlage (1) zum Betreiben eines vorzugsweise industriellen Prozesses unter Nutzung einer Schmelze (2), vorzugsweise in einer Feuerverzinkung von Eisen- oder Stahlbauteilen, insbesondere zur Durchführung des Verfahrens nach einem der vorhergehenden Aspekte,
mit einem Kessel (3) für die zu beheizende Schmelze (2),
mit wenigstens einer Taucheinrichtung (13) zum Ein- und/oder Austauchen wenigstens eines Bauteils (14) in die Schmelze (2) und/oder aus der Schmelze (2),
mit wenigstens einer elektrischen Beheizungseinrichtung (4) zum thermischen Aufladen und/oder Beheizen der Schmelze (2) und
mit wenigstens einer Steuer- und/oder Regelungseinrichtung (6), die dazu ausgebildet ist, einen in einem Stromnetz (5) anfallenden Überschussstrom zumindest teilweise zu entnehmen und die elektrische Beheizungseinrichtung (4) zu betreiben.

### Aspekt 13:

13. Anlage nach Aspekt 12, dadurch gekennzeichnet,
dass die Anlage (1) wenigstens einen der Schmelze (2) vor- oder nachgelagerten weiteren Kessel (5) für ein Behandlungsbad (8), insbesondere für ein der Schmelze (2) vorgelagertes Flussmittelbad, aufweist, insbesondere wobei wenigstens eine weitere elektrische Beheizungseinrichtung (10) zum thermischen Aufladen und/oder Beheizen des Behandlungsbades (8) vorgesehen ist, besonders bevorzugt wobei die Steuer- und/oder Regelungseinrichtung (6) dazu ausgebildet ist, den im Stromnetz (5) anfallenden Überschussstrom zumindest teilweise zu entnehmen und die weitere elektrische Beheizungseinrichtung (10) zu betreiben.

### Aspekt 14:

14. Anlage nach Aspekt 12 oder Aspekt 13, dadurch gekennzeichnet,
dass wenigstens eine Umwandlungseinrichtung (11, 12) zum zumindest teilweisen Umwandeln der Wärmeenergie der erhitzten Schmelze (2) und/oder des erhitzten Behandlungsbades (8) in elektrischen Strom vorgesehen ist, vorzugsweise wobei die Umwandlungseinrichtung (11, 12) dazu ausgebildet ist, den umgewandelten elektrischen Strom wieder dem Stromnetz (5) zurückzuführen.

### Aspekt 15:

15. Verwendung einer vorzugsweise metallischen Schmelze (2) und/oder eines Behandlungsbades (8), vorzugsweise eines Flussmittelbades, als Wärme-und/oder Pufferspeicher, wobei die Schmelze (2) und/oder das Behandlungsbad (8) durch Überschussstrom aus einem Stromnetz (5) thermisch aufgeladen und/oder erhitzt wird bzw. werden und wobei die erhitzte Schmelze (2) und/oder das erhitzte Behandlungsbad (8) in einem industriellen Produktionsprozess, vorzugsweise einem Beschichtungsprozess, wie einer Verzinkung, vorzugsweise Feuerverzinkung mit vorgelagerter Flussmittelbehandlung, vorgehalten und/oder bereitgestellt wird bzw. werden.

## Patentansprüche

1. Anlage (1) zum Betreiben eines industriellen Prozesses unter Nutzung einer Schmelze (2), wobei die Schmelze (2) eine Metallschmelze ist und wobei der industrielle Prozess eine Feuerverzinkung von Eisen- oder Stahlbauteilen ist,
mit einem Kessel (3) für die zu beheizende Schmelze (2),
mit wenigstens einer Taucheinrichtung (13) zum Ein- und/oder Austauchen wenigstens eines Bauteils (14) in die Schmelze (2) und/oder aus der Schmelze (2),
mit wenigstens einer elektrischen Beheizungseinrichtung (4) zum thermischen Aufladen und/oder Beheizen der Schmelze (2) und
mit wenigstens einer Steuer- und/oder Regelungseinrichtung (6), die dazu ausgebildet ist, einen in einem Stromnetz (5) anfallenden Überschussstrom zumindest teilweise zu entnehmen und die elektrische Beheizungseinrichtung (4) zu betreiben;
wobei die Steuer- und/oder Regelungseinrichtung (6) eine Detektionseinrichtung (7) zur Detektion des Auftretens des Überschussstroms aufweist;
wobei die elektrische Beheizungseinrichtung (4) derart betrieben wird, dass die beheizte Schmelze (2) unter Nutzung von Überschussstrom in einer Aufladungstemperatur bereitgestellt und/oder vorgehalten wird;
wobei die Schmelze (2) bei einer Aufladungstemperatur bereitgestellt und/oder vorgehalten wird, die eine im Produktionsprozess vorliegende Verarbeitungstemperatur der Schmelze (2) um wenigstens 10 °C übersteigt; und
wobei die Aufladungstemperatur der Schmelze (2) im Bereich von 390 °C bis 900 °C liegt.

2. Anlage nach Anspruch 1, **dadurch gekennzeichnet,**
**dass** die Anlage (1) wenigstens einen der Schmelze (2) vor- oder nachgelagerten weiteren Kessel (5) für ein Behandlungsbad (8), insbesondere für ein der Schmelze (2) vorgelagertes Flussmittelbad, aufweist;
insbesondere wobei wenigstens eine weitere elektrische Beheizungseinrichtung (10) zum thermischen Aufladen und/oder Beheizen des Behandlungsbades (8) vorgesehen ist;
besonders bevorzugt wobei die Steuer- und/oder Regelungseinrichtung (6) dazu ausgebildet ist, den im Stromnetz (5) anfallenden Überschussstrom zumindest teilweise zu entnehmen und die weitere elektrische Beheizungseinrichtung (10) zu betreiben.

3. Anlage nach Anspruch 1 oder Anspruch 2, **dadurch gekennzeichnet,**
**dass** wenigstens eine Umwandlungseinrichtung (11, 12) zum zumindest teilweisen Umwandeln der Wärmeenergie der erhitzten Schmelze (2) und/oder des erhitzten Behandlungsbades (8) in elektrischen Strom vorgesehen ist;
vorzugsweise wobei die Umwandlungseinrichtung (11, 12) dazu ausgebildet ist, den umgewandelten elektrischen Strom wieder dem Stromnetz (5) zurückzuführen.

4. Anlage nach einem der vorangehenden Ansprüche, **dadurch gekennzeichnet,**
**dass** die Beheizung der Schmelze (2) dem Produktionsprozess vor- oder nachgelagert ist und von dem Produktionsprozess entkoppelt ist.

5. Anlage nach einem der vorangehenden Ansprüche, **dadurch gekennzeichnet,**
**dass** wenigstens ein der Schmelze (2) vor- oder nachgelagertes Behandlungsbad (8), insbesondere ein der Schmelze (2) vorgelagertes Flussmittelbad, durch den entnommenen Überschussstrom thermisch aufgeladen und/oder erhitzt wird;
insbesondere wobei das erhitzte Behandlungsbad (8) sowohl als elektrischer Wärmespeicher als auch zur Verarbeitung im industriellen Produktionsprozess vorgehalten und/oder bereitgestellt wird.

6. Anlage nach einem der vorangehenden Ansprüche, **dadurch gekennzeichnet,**
**dass** Wärmeenergie der erhitzten Schmelze (2) und/oder des erhitzten Behandlungsbades (8) zumindest teilweise wieder entnommen und mittels wenigstens einer Umwandlungseinrichtung (11, 12) in elektrischen Strom umgewandelt wird, vorzugsweise wobei der umgewandelte elektrische Strom dem Stromnetz (5) wieder zugeführt wird.

7. Anlage nach einem der vorangehenden Ansprüche, **dadurch gekennzeichnet,**
**dass** die Beheizung des Behandlungsbades (8) und/oder die Wärmeentnahme aus der Schmelze (2) und/oder aus dem Behandlungsbad (8) dem Produktionsprozess vor- oder nachgelagert und/oder von dem Produktionsprozess entkoppelt ist.

8. Verwendung einer Anlage nach einem der vorangehenden Ansprüche in einem Verfahren zur Nutzung von in einem Stromnetz (5) anfallendem Überschussstrom,
wobei der Überschussstrom dem Stromnetz (5) zumindest teilweise entnommen und in einem Aufladungszeitraum zumindest eine Schmelze (2), wobei die Schmelze (2) eine Metallschmelze ist, durch den entnommenen Überschussstrom auf eine Aufladungstemperatur thermisch aufgeladen und/oder erhitzt wird;
wobei die erhitzte Schmelze (2) sowohl als elektrischer Wärmespeicher als auch zur Verarbeitung in einem industriellen Produktionsprozess, wobei der industrielle Produktionsprozess eine Feuerverzinkung ist, vorgehalten und/oder bereitgestellt wird;
wobei die Beheizung der Schmelze (2) dem Produktionsprozess vor- oder nachgelagert ist und von dem Produktionsprozess entkoppelt ist;
wobei die Schmelze (2) bei einer Aufladungstemperatur bereitgestellt und/oder vorgehalten wird, die eine im Produktionsprozess vorliegende Verarbeitungstemperatur der Schmelze (2) um wenigstens 10 °C übersteigt; und
wobei die Aufladungstemperatur der Schmelze (2) im Bereich von 390 °C bis 900 °C liegt.

9. Verwendung nach Anspruch 8, **dadurch gekennzeichnet,**
**dass** wenigstens ein der Schmelze (2) vor- oder nachgelagertes Behandlungsbad (8), insbesondere ein der Schmelze (2) vorgelagertes Flussmittelbad, durch den entnommenen Überschussstrom thermisch aufgeladen und/oder erhitzt wird, insbesondere wobei das erhitzte Behandlungsbad (8) sowohl als elektrischer Wärmespeicher als auch zur Verarbeitung im industriellen Produktionsprozess vorgehalten und/oder bereitgestellt wird.

10. Verwendung nach Anspruch 8 oder Anspruch 9, **dadurch gekennzeichnet,**
**dass** Wärmeenergie der erhitzten Schmelze (2) und/oder des erhitzten Behandlungsbades (8) zumindest teilweise wieder entnommen und mittels wenigstens einer Umwandlungseinrichtung (11, 12) in elektrischen Strom umgewandelt wird, vorzugsweise wobei der umgewandelte elektrische Strom dem Stromnetz (5) wieder zugeführt wird.

11. Verwendung nach einem der vorhergehenden Ansprüche, **dadurch gekennzeichnet,**
**dass** die Beheizung des Behandlungsbades (8) und/oder die Wärmeentnahme aus der Schmelze (2) und/oder aus dem Behandlungsbad (8) dem Produktionsprozess vor- oder nachgelagert und/oder von dem Produktionsprozess entkoppelt ist.

12. Verwendung nach einem der vorhergehenden Ansprüche, **dadurch gekennzeichnet,**
**dass** die Beheizung der Schmelze (2) und/oder des Behandlungsbades (8) zur Aufladung mit Überschussstrom zumindest zeitweise in einem Aufladungszeitraum zwischen 6.00 Uhr bis 18.00 Uhr erfolgt, insbesondere wobei der Produktionsprozess außerhalb des Aufladungszeitraums und/oder entkoppelt von Aufladungszeitraum erfolgt.

13. Verwendung nach einem der vorhergehenden Ansprüche, **dadurch gekennzeichnet,**
**dass** die Beheizung der Schmelze (2) und/oder des Behandlungsbades (8) und/oder die Wärmeentnahme aus der Schmelze (2) und/oder aus dem Behandlungsbades (8) über einen Zeitraum von wenigstens 1 Stunde / Tag, vorzugsweise wenigstens 5 Stunden / Tag, erfolgt.

14. Verwendung nach einem der vorhergehenden Ansprüche, **dadurch gekennzeichnet,**
**dass** das Auftreten des Überschussstroms über eine Detektionseinrichtung (7) detektiert und die Schmelze (2) und/oder das Behandlungsbad (8) vorzugsweise automatisch mittels wenigstens einer elektrischen Beheizungseinrichtung (4) und/oder einer weiteren elektrischen Beheizungseinrichtung (10) erhitzt wird bzw. werden, vorzugsweise derart, dass die beheizte Schmelze (2) und/oder das beheizte Behandlungsbad (8) unter Nutzung von Überschussstrom in einer Aufladungstemperatur bereitgestellt und/oder vorgehalten wird bzw. werden, besonders bevorzugt wobei die Beheizung der Schmelze (2) und/oder des Behandlungsbades (8) ausschließlich durch die elektrische Beheizungseinrichtung (4) und/oder der weiteren elektrischen Beheizungseinrichtung (10) unter Nutzung von Überschussstrom erfolgt.

15. Verwendung nach einem der vorhergehenden Ansprüche, **dadurch gekennzeichnet,**
**dass** die Schmelze (2) bei einer Aufladungstemperatur bereitgestellt und/oder vorgehalten wird, die eine im Produktionsprozess vorliegende Verarbeitungstemperatur der Schmelze (2) wenigstens um 20 °C, besonders bevorzugt wenigstens um 50 °C, übersteigt; und/oder
**dass** das Behandlungsbad (8) bei einer Aufladungstemperatur bereitgestellt und/oder vorgehalten wird, die eine im Produktionsprozess vorliegende Verarbeitungstemperatur des Behandlungsbades (8) übersteigt, vorzugsweise um wenigstens 10 °C, insbesondere wenigstens um 20 °C, besonders bevorzugt wenigstens um 50 °C, übersteigt.

16. Verwendung nach einem der vorhergehenden Ansprüche, **dadurch gekennzeichnet,**
**dass** die Verarbeitungstemperatur wenigstens 10 °C, vorzugsweise wenigstens 20 °C, besonders bevorzugt wenigstens 30 °C, ganz besonders bevorzugt 50 °C, oberhalb einer Schmelztemperatur der Schmelze (2) und/oder des Behandlungsbades (8) liegt.

17. Verwendung nach einem der vorhergehenden Ansprüche, **dadurch gekennzeichnet,**
**dass** die Aufladungstemperatur wenigstens 10 °C, vorzugsweise wenigstens 20 °C, besonders bevorzugt wenigstens 30 °C, ganz besonders bevorzugt wenigstens 50 °C, unterhalb einer Siedetemperatur der Schmelze (2) und/oder des Behandlungsbades (8) liegt.

18. Verwendung nach einem der vorhergehenden Ansprüche, **dadurch gekennzeichnet,**
**dass** die Aufladungstemperatur der Schmelze (2) im Bereich von 430 °C bis 880 °C, besonders bevorzugt im Bereich von 500 °C bis 850 °C, liegt und/oder dass die Aufladungstemperatur des Behandlungsbades (8) im Bereich von 60 °C bis 200 °C, vorzugsweise im Bereich von 80 °C bis 180 °C, besonders bevorzugt im Bereich von 100 °C bis 150 °C, liegt.
